**Europäisches Patentamt**

**European Patent Office**

**Office européen des brevets**

(19)

(11) Veröffentlichungsnummer: **0 431 304 A2**

# (12) EUROPÄISCHE PATENTANMELDUNG

(21) Anmeldenummer: **90120639.1**

(22) Anmeldetag: **27.10.90**

(51) Int. Cl.5: **B65D 83/00**

(30) Priorität: **18.11.89 DE 3938433**

(43) Veröffentlichungstag der Anmeldung:
**12.06.91 Patentblatt 91/24**

(84) Benannte Vertragsstaaten:
**AT BE CH DE DK ES FR GB GR IT LI LU NL SE**

(71) Anmelder: **Pohl GmbH & Co. KG**
**Hertzstrasse 12**
**W-7500 Karlsruhe 21(DE)**

(72) Erfinder: **Von Schuckmann, Alfred**
**Kervendonk 63**
**W-4178 Kevelaer 2(DE)**

(74) Vertreter: **Rieder, Hans-Joachim, Dr. et al**
**Corneliusstrasse 45**
**W-5600 Wuppertal 11(DE)**

(54) **Vorrichtung zur schrittweisen Produkt-Ausbringung.**

(57) Die Erfindung betrifft eine Vorrichtung zum schrittweisen Zahnstangen-Transport eines Druckbodens (24), z. B. an Spendern (Sp) zur portionierten Ausbringung von Produkten, beispielsweise pastöser Art und schlägt zur Erzielung einer insbesondere bewegungstechnisch optimalen Lösung vor, daß dem durch Handhaben-Verlagerung bewegten Druckboden (24) zwei sich wechselweise an der Zahnstangenleiste abstützende Widerlagerteller (I, II) zugeordnet sind, welche sich bei Druckbodenverlagerung entgegen Federbelastung einander nähern.

FIG.2

## VORRICHTUNG ZUR SCHRITTWEISEN PRODUKT-AUSBRINGUNG

Die Erfindung bezieht sich auf eine Vorrichtung zum schrittweisen Zahnstangen-Transport eines Druckbodens, z. B. an Spendern zur portionierten Ausbringung von Produkten, beispielsweise pastöser Art, bei welcher Vorrichtung sich der Druckboden entgegen der Verlagerung einer durch Federbelastung wieder in die Grundstellung zurücktretenden Handhabe bewegt.

Eine Vorrichtung zum schrittweisen Zahnstangen-Transport dieser Art ist durch die EP-OS 0 248 278 (Fig. 102) bekannt. Der Druckboden ist dort als Kletterkolben gestaltet, an dem sich das untere Ende eines mit pastöser Masse angefüllten Sackes abstützt. Der Rand des Kolbens wirkt unter Verlagerung der Handhabe wechselweise mit einer, von dieser beaufschlagten, paarig angeordneten Transportleiste und einer paarig angeordneten, ortsfesten Widerlagerzahnleiste zusammen. Diese Ausgestaltung ist aber nicht nur auf den Mehraufwand eines zusätzlichen Zahnleistenpaares angewiesen; vielmehr bringt die entsprechende Vergrößerung der durch die Zahnungsstruktur gegebenen Rauhungszone im Inneren der Vorrichtung auch eine zusätzliche Quelle mechanischer Beanspruchung für die Sackwandung, und das an einem intermittierend beweglichen Element. Die Transportzahnleisten führen nämlich einen Hin- und Rückhub aus. Die Rauhungswirkung der fast vollflächig innenseitig angeordneten Zahnung kann überdies auch bremsende Wirkung haben, so daß die Vorrichtung auf besonders starke Rückstellfedern angewiesen ist, wenn sie nicht schwerfällig wirken soll. Das wiederum bedingt höhere Bedienungskraft.

Eine ähnliche Vorrichtung ist durch die FR-OS 2 489 267 bekannt. Dort wird aber das auszugebende Produkt in Gegenrichtung der Verlagerung der Handhabe ausgebracht.

Durch die US-PS 3 774 816 (Fig. 2) ist es bekannt, eine zentralliegende Zahnstange über zwei wechselweise an letzterer wirkende Klinken in Ausgaberichtung zu verlagern. In dieser Richtung befindet sich ein die pastöse Masse auspressender Druckboden.

Durch die US-PS 2 361 647 ist es schließlich bekannt, den Vorschub des Druckbodens über ein flexibles, spitzenhütchenförmiges Stellglied zu bewirken, welches im Rükken des Kolbens zentral angebracht ist. Durch Drücken gegen den Hütchenrand, was aufgrund einer entsprechend elastisch gehaltenen Gehäusewandung möglich ist, verlagert sich der Druckboden schrittweise in Richtung der Ausgabeöffnung des dortigen Spenders. Es ist nicht bekannt, daß diese Lösung Eingang in die Praxis gefunden hätte.

Aufgabe der vorliegenden Erfindung ist es, eine gattungsgemäße Vorrichtung zum schrittweisen Zahnstangen-Transport eines Druckbodens im Aufbau funktionstechnisch und hinsichtlich der Bedienung zu verbessern.

Gelöst ist diese Aufgabe durch die im Anspruch 1 angegebene Erfindung.

Die Unteransprüche sind vorteilhafte Weiterbildungen der erfindungsgemäßen Vorrichtung.

Zufolge solcher Ausgestaltung ist eine gattungsgemäße Vorrichtung erhöhten Gebrauchswerts erzielt: Der technische Aufwand ist verringert; man kommt nur noch mit einem Zahnleistentyp aus, nämlich dem ortsfesten. Das bringt eine bessere Produktschonung mit sich. Auch die Handhabung ist günstiger. Es kommt zu einer direktwirkenden Zwangssteuerung. Konkret ist dabei so vorgegangen, daß dem Druckboden zwei sich wechselweise an der Zahnstange abstützende Widerlagerteller zugeordnet sind, welche sich bei Druckbodenverlagerung entgegen Federbelastung einander nähern. Während der eine Widerlagerteller sich ortsfest abstützt, wird der andere Widerlagerteller nachgeschleppt. Dann stützt sich der nachgeschleppte ab und schiebt per Federkraft den anderen Widerlagerteller in Ausgaberichtung einen Schritt vor. Die Relativbewegung zwischen beiden Widerlagertellern findet im Rücken der Produktzone statt. Es kommt also bezüglich der Bewegungsteile nicht zu den angedeuteten Beanspruchungen. Betätigungsauslöser ist der unter Druckbelastung bringbare Füllinhalt des Spenders. Konkret ist diesbezüglich so vorgegangen, daß die Druckboden-Belastung durch Beaufschlagung desselben mit der Wand eines eine pastöse Masse als produktenthaltenden Kartuschensackes erzielt ist, welcher am oberen Ende mit einer an der Oberseite die Handhabe ausbildenden und in einem Rohrgehäuse axial begrenzt frei verschieblichen Kopfstück ausgestattet ist. Das axial begrenzt frei verschieblich gelagerte Kopfstück erlaubt es, die Bedienungskraft gezielt direkt auf den Sack zu übertragen. Am anderen, bodenseitigen Ende des Sackes liegt ebenfalls ein günstiger, ausgewogener, zentraler Kraftfluß vor. Der Sackinhalt selbst wirkt zufolge der einen Stützkern bildenden Masse wie ein "Stab" bzw. wie eine verlängerte Handhabe des Kopfstükkes. Das ganze befindet sich geschützt in einem Rohrgehäuse, welches mit der Bedienungshand ergriffen wird, wobei beispielsweise der Zeigefinger, das Kopfstück übergreifend, die axiale Bewegung desselben durchführt. Weiter wird vorgeschlagen, daß jeder Widerlager teller zwei diametral einander gegenüberliegende Rastzungen besitzt, die entsprechend auf unterschiedlichen Höhenlagen in die Zahnlücken zweier gegenüberliegender Zahnstangenleisten eingreifen. Im Hinblick auf die anzustrebende hohe Flexibilität der Rastzungen bei trotzdem guter Standstabilität erweist es sich als vorteilhaft, daß die Rastzungen eine kammzinkenartige Struktur besitzen, die von einem nach unten gerichteten Tellerrand ausgeht. Außerdem besteht ein vorteilhaftes Ausgestaltungsmerkmal darin, daß der obere Widerlagerteller mit einer Büchse den unteren Widerlagerteller trägt, welche Büchse am unteren Ende Hubfinger aufweist, die den unteren Widerlagerteller untergreifen und bei Verlagerung des Druckbodens den unteren Widerlagerteller in Richtung des oberen Widerlagertellers auf der Büchse geführt verschieben. Diese entsprechend radial ausgerichteten Hubfinger sind zweckmäßig in gleicher Winkelverteilung zugeordnet, so daß die Übertragungskräfte entsprechend gleichberechtigt wirken. Dabei wird eine vorteilhafte Ausgestaltung auch dahingehend gesehen, daß die Hubfinger doppelarmig ausgebildet sind und die einwärtsragenden Arme vom unteren Ende eines Stößels des Druckbodens beaufschlagt sind. Der einwärtsweisende Arm ist zweckmäßig etwas kürzer als der nach auswärts zeigende Arm, so daß der Druckboden eine gewisse erhöhte Widerlagerkraft bildet und vorrangig pastöse Masse ausgedrückt wird. Bei Erreichen eines bestimmten Preßdruckes bricht die Widerlagerkraft zusammen, was zur automatischen Einleitung der Nachstellbewegung der Transporteinheit führt. Unter Berücksichtigung des anzustrebenden rotationssymmetrischen Aufbaues, befindet sich der Stößel im Zentrum der geschaffenen Transporteinheit. Aus zuordnungstechnischen und auch funktionstechnischen Gründen ist es zweckmäßig, daß das mit dem inneren Arm der Hubfinger zusammenwirkende Ende des Stößels kuppelförmig zu gestalten. Eine solche Lösung erweist sich überdies als besonders verschleißarm. Weiter ist eine günstige Ausgestaltung erzielt durch eine druckknopfartige Klipsverbindung zwischen den einwärtsragenden Armen der Hubfinger und einem Zapfen am unteren Ende des Stößels. Letzterer bildet das Patrizenteil, die Grundstellung von den inneren Enden der Hubfinger umschlossene, zentrale Öffnung dagegen die Matrizenhöhlung. Im Hinblick auf die die Federbelastung bringenden Mittel erweist sich eine Ausgestaltung dahingehend als günstig, daß in dem die Büchse umgebenden Ringraum Federelemente zur Spreizbelastung der Widerlagerteller vorgesehen sind. Alternativ besteht natürlich auch die Möglichkeit eine Schraubengangdruckfeder zwischenzuschalten, wobei die brückenartig von Widerlagerteller zu Widerlagerteller reichende Büchse zugleich die Führung für eine solche Feder übernehmen könnte. Der radiale Überstand der Teller über den Büchsenquerschnitt hinaus schafft praktisch zwangsläufig so eine als Federkammer nutzbaren Raum. Weiter ergibt sich ein vorteilhafter Aufbau dadurch, daß die Federelemente als in Umfangsrichtung ansteigende, dem einen Widerlagerteller angeformte Federzungen gestaltet sind. Dazu wird auf entsprechende Rückstelleigenschaften aufweisendes Kunststoffmaterial zurückgegriffen. Praktisch alle Teile der gesamten Vorrichtung bestehen aus Kunststoff. Eine besonders einfache Art, die doppelarmigen Hubfinger zu lagern, ist die, daß die Hubfinger über Filmscharniere am unteren Büchsenrand angeformt sind, welche Filmscharniere gegenüber dem Büchsenstirnrand etwas einwärts zurückversetzt liegen. Die entsprechende Zurückverlagerung läßt sich in vorteilhafterweise für eine Seitenführung der Hubfinger nutzen, was ebenfalls ein Kennzeichen der vorliegenden Anmeldung ist. Überdies erweist es sich als vorteilhaft, daß die aus Druckboden und Widerlagertellern bestehende Transporteinheit zu einem die Zahnleisten besitzenden Einsatz des Rohrgehäuses drehbar ist derart, daß die Rastzungen aus dem Bereich der Zahnleisten seitlich treten zwecks Erzielung einer freien Rückbewegung der Transporteinheit gegen die Sperrichtung der Zähne in die Ausgangsstellung. Auch letztere ist anschlagbegrenzt. Eine solche Ausgestaltung erweist sich als besonders umweltfreundlich, da sie dem Spender die Einwegbenutzung und die damit zusammenhängenden Nachteile nimmt. Ein solcher Spender kann immer wieder unter Einsetzen einer neuen Patrone, einer neuen Sackkartusche, eines neuen Tablettenstapels etc. wiederverwendet werden. Baulich ist es in diesem Zusammenhang weiter von Vorteil, daß die Relativbewegung durch Drehen bewirkt wird, und zwar an einem Drehkranz an dem einen Ende des Einsatzes, und die Transporteinheit radial auswärts gerichtete Gleitsteine besitzt, die in Schienenführungen des den Einsatz umgebenden Rohrgehäuses laufen. Diese Ausgestaltung gewinnt im Hinblick auf eine angestrebt einfache Montage sowie Sicherung der Transporteinheit noch an Bedeutung insofern, als der untere Widerlagerteller Durchstecköffnungen für die Hubfinger des oberen Widerlagertellers ausbildet zur bajonettverschlußartigen Montage (Steck/Dreh-Verbindung) beider Teile derart, daß die Gleitsteine in einer Geraden übereinanderliegen und das Lösen der Bajonettverschluß-Verbindung durch die Schienenführung der Gleitsteine gesichert ist. Der Druckboden läßt sich im Wege der Vormontage zusammenstellen und auch beispielsweise zum Zwecke eines etwa notwendigen Reinigens jederzeit bequem wieder lösen. Fertigungstechnisch ist die nachstehende Lösung noch von Vorteil, die darin besteht, daß der obere Widerlagerteller mit fluchtend zu den Hubfingern angeordneten Fenstern ausgestattet ist. Durch diese Fenster können daher Kernteile der Spritzform ragen, welche Kernteile für die Ausformung des Oberbereiches der Hubfinger verantwortlich sind.

Weiter ist eine vorteilhafte Ausgestaltung im Hinblick auf den Zusammenhalt des Spenders erreicht durch einen Fesselungsstift des Rohrgehäuses, welcher Fesselungsstift einen Endring des Einsatzes übergreift. Diesbezüglich besteht eine vorteilhafte Weiterbildung darin, daß der Endring an der Übergreifseite Rastmulden zum Eintritt des Fesselungsstiftes in der Enddrehstellung des Einsatzes aufweist. Gemeint sind hier beide Enddrehstellungen, von denen die eine der Funktion "Spenden" und die andere der Funktion "Füllen" vorbehalten ist. Es liegen so definierte, spürbare Raststellungen vor. Endlich bringt die Erfindung noch in Vorschlag, daß das Kopfstück des Kartuschensackes an federnden Fingern verrastet, die an dem oberen Ende des Einsatzes vorgesehen sind. Die Verrastung ist auf eine reversible Zuordnung des Kopfstückes hin konzipiert, also auch im Sinne der ständigen Wiederverwendbarkeit des Spenders.

Der Gegenstand der Erfindung ist nachstehend anhand eines zeichnerisch veranschaulichten Ausführungsbeispieles näher erläutert. Es zeigt:

Fig. 1. den mit der erfindungsgemäßen Vorrichtung ausgestatteten Spender in Seitenansicht mit in strichpunktierten Linienart angedeuteter, den Spenderkopf überfangender Schutzkappe,

Fig. 2 einen Vertikalschnitt durch den Spender bei nur teilweise mitgeschnittenem Eingerichte,

Fig. 3 das als Rohrgehäuse gestaltete Außengehäuse in perspektivischer Einzeldarstellung,

Fig. 4 den Einsatz in perspektivischer Einzeldarstellung,

Fig. 5 die Schutzkappe in gleicher Darstellungsart,

Fig. 6 den mit dem auszugebenden Produkt zu füllenden Kartuschensack nebst einem Adapter und Kopfstück, in Explosionsdarstellung,

Fig. 7 in gleicher Darstellungsart die Transporteinheit, soweit sie den Druckboden und die Widerlagerteller betrifft, und zwar in steckmontagegerechter Zuordnungsbereitschaftsstellung,

Fig. 8 den unteren Abschnitt des Spenders im Vertikalschnitt, vergrößert, und zwar die Grundstellung der Transporteinheit wiedergebend,

Fig. 9 eine gleiche Darstellung in Betätigungsstellung bei sich hochziehendem unteren Widerlagerteller,

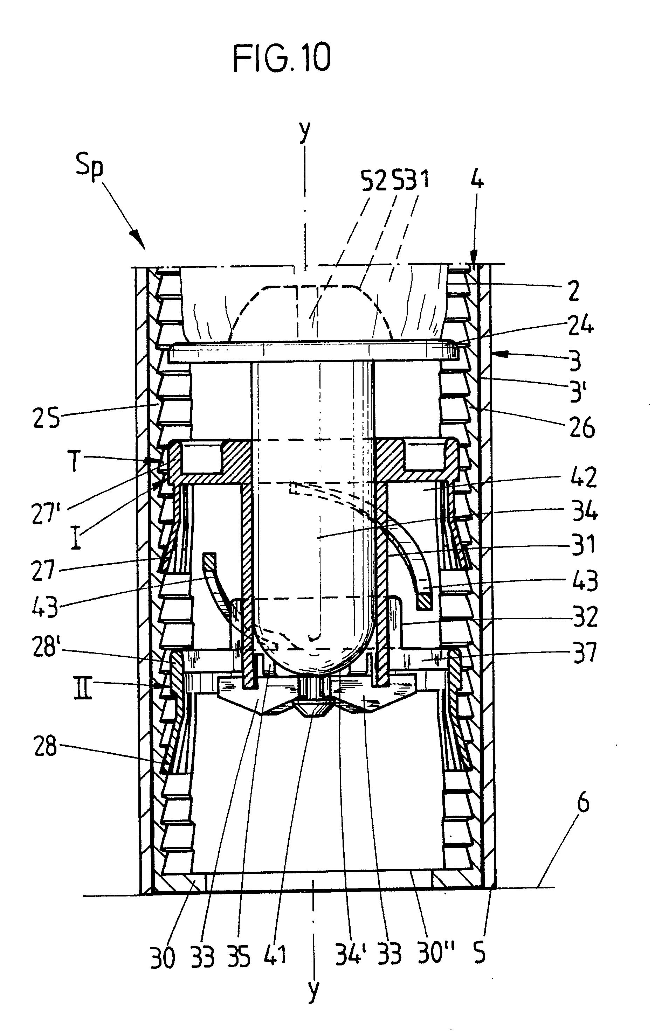

Fig. 10 eine gleiche Darstellung wie Figur 8, jedoch die neue Grundstellung zeigend,

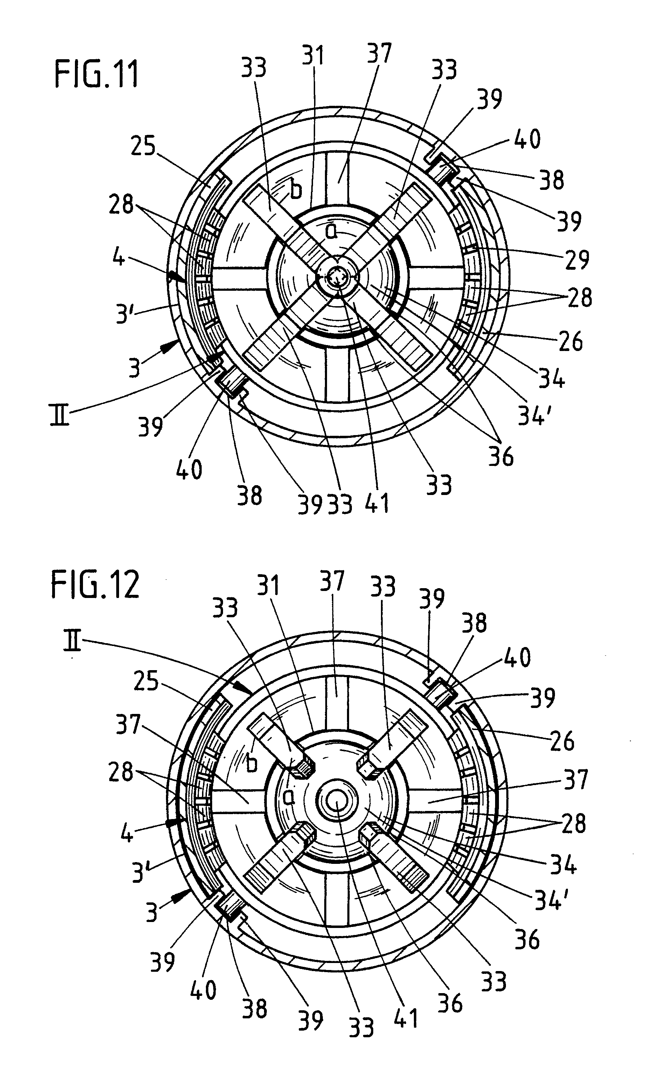

Fig. 11 den Schnitt gemäß Linie XI-XI in Figur 8,

Fig. 12 den Schnitt gemäß Linie XII-XII in Figur 9,

Fig. 13 den Schnitt gemäß Linie XIII-XIII in Figur 8,

Fig. 14 einen der Figur 13 entsprechenden Schnitt, jedoch in der Stellung, in der die Rastzungen der Widerlagerteller in Eingriff zu den Zahnlücken der Zahnstangenleisten stehen,

Fig. 15 den Schnitt gemäß Linie XV-XV in Figur 8 bei außer Eingriff getretenen Rastzungen,

Fig. 16 dasselbe bei in Rasteingriff zu den Zahnstangenleisten befindlichen Rastzungen,

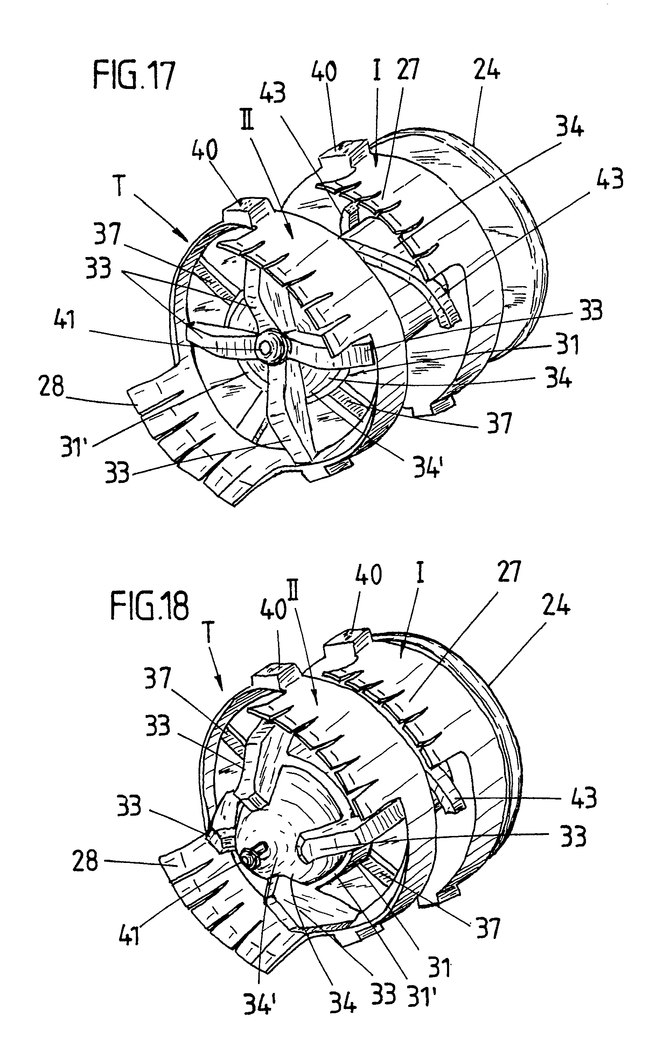

Fig. 17 die beiden über dem Stößel miteinander klipsverbundenen Widerlagerteller in perspektivischer Ansicht, und zwar bei in Grundstellung befindlichen Hubfingern und

Fig. 18 dasselbe bei in Wirkstellung gesteuerten Hubfingern (die letzten beiden Figuren sind eine Freihandskizze).

Der dargestelle, die erfindungsgemäße Vorrichtung verkörpernde Spender Sp dient beispielsweise zur Ausgabe pastöser Masse 1, die in einer länglichen, schlauchartigen Sackkartusche 2 enthalten ist. Nach Entleeren der aus kollabierbarem Material, beispielsweise Kunststoffolie gebildeten Sackkartusche 2 und Entfernen derselben kann eine neue Sackkartusche 2 in den Spender Sp eingesetst werden. Die diesbezügliche Zuordnung geschieht vom oberen Ende des als Standgerät ausgebildeten Spenders Sp her. Bodenseitig ist der Spender in einem Querschnittsmaß offen, welches unter dem Durchmesser der prallgefüllten Sackkartusche 2 liegt.

Bestandteile des Spenders Sp sind ein Außengehäuse, bezeichnet mit Rohrgehäuse 3 und ein diesem einverleibter Einsatz 4. Letzterer weist eine der zylindrischen Rohrform angepaßte Kontur auf und stützt sich radial an der Innenwandfläche 3' des Rohrgehäuses 3 ab. Der Einsatz 4 wird von oben her eingesteckt und schließt unterseitig höchstens ebenengleich mit dem dortigen, einen Stellrand 5 bildenden Stirnende des Rohrgehäuses 3 ab. Zur Belassung einer genügenden Stellrandtiefe springt die Unterseite des Einsatzes 4 zweckmäßig etwas nach innen hin zurück.

Die Standfläche, beispielsweise eiher Konsole für den Spender Sp ist mit 6 bezeichnet.

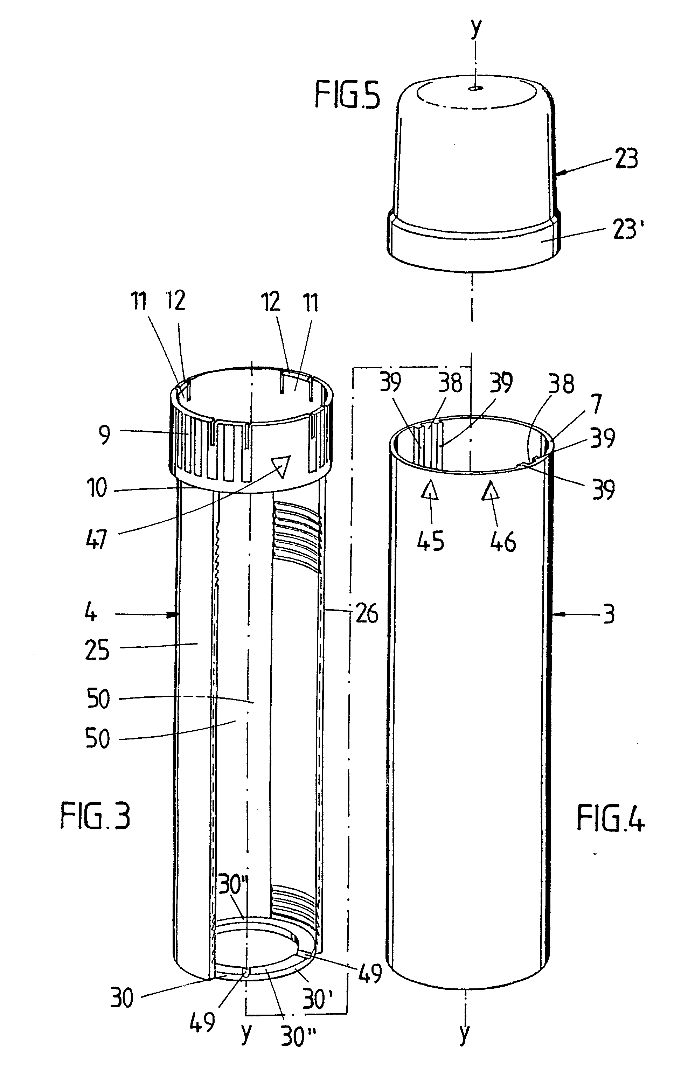

Das obere Stirnende 7 des Rohrgehäuses 3 wird von einem einen Drehkranz 8 bildenden Abschnitt des Einsatzes 4 radial wie axial überragt. Dessen Mantelfläche kann, wie aus Figur 3 ersichtlich, durch Längsriefen 9 gerauht sein. Der axiale Überstand des Drehkranzes 8 entspricht etwa dem Maß einer Fingerbreite.

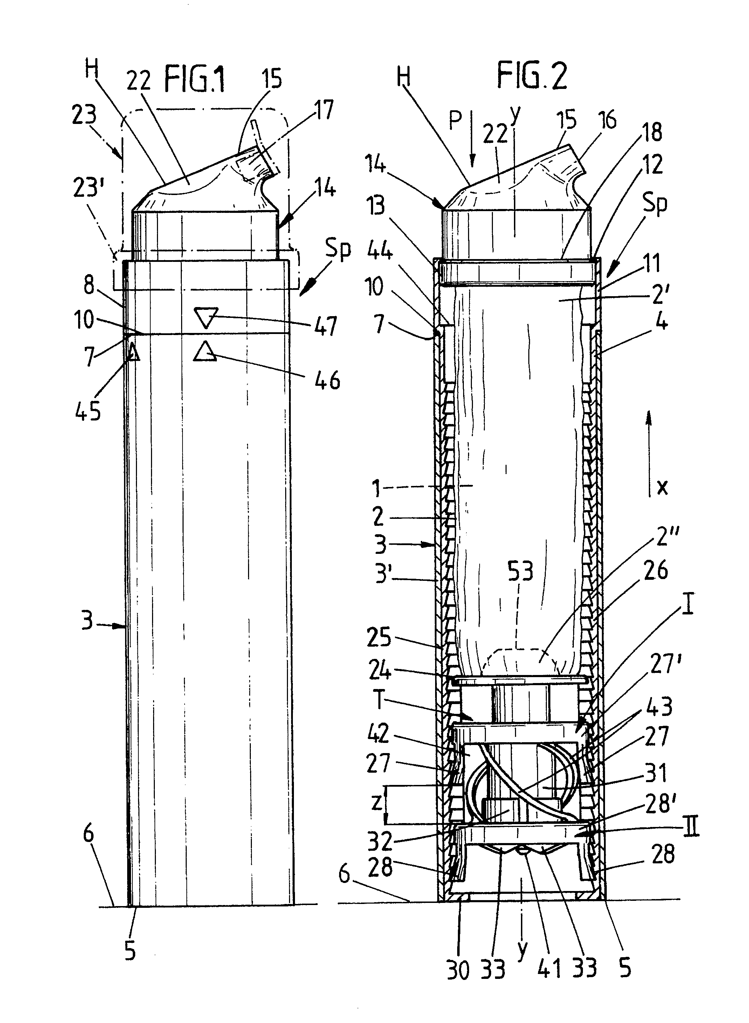

Wie Figur 2 entnehmbar, ist der Drehkranz 8 durch nach außen gerichteten Wandungsversatz der Rohrwandung des Einsatzes 4 auf eine Ebene gebracht, derart, daß die Mantelfläche des Drehkranzes 8 ebenengleich fluchtet mit der des Rohrgehäuses 3. Durch diesen Wandungsversatz erhält man eine Schulter 10, die sich auf der ebenen, korrespondierenden Fläche des Stirnendes 7 abstützt.

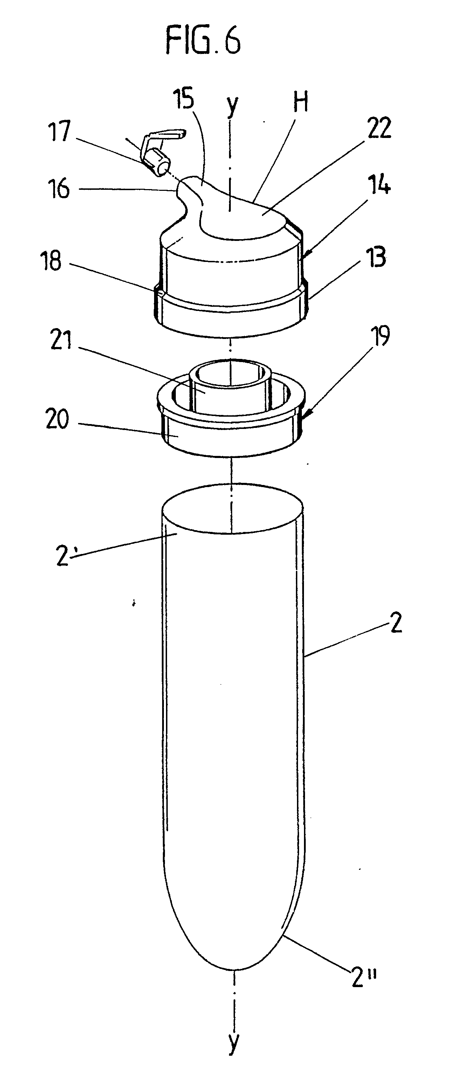

Wie Figur 3 deutlich entnehmbar, weist der Drehkranz 8 vier winkelgleich verteilt angeordnete, aus der zylindrisch gewölbten Wandung gebildete, durch Freischnitt erzeugte Finger 11 auf. Letztere besitzen an ihren freien Enden je eine einwärts gerichtete Rastnase 12. Diese übergreifen einen Führungskragen 13 eines den oberen Abschluß des Kartuschensackes 2 bildenden, relativ steifen Kopf stückes 14. Dieses im Spender Sp respektive Einsatz 4 geführte Kopfstück setzt sich nach oben hin in eine zur Seite ansteigend verlaufende Tülle 15 fort. Deren Ausgabeöffnung 16 verschließt ein Stopf en 17 (vgl. Fig. 6). Zumindest der Führungskragen 13 weist zylindrische Gestalt auf. Die Gegenrastfläche für die Rastnasen 12 ist eine durch Wandungsversatz erzeugte Ringschulter 18.

Unter Hinweis auf Figur 6 wird erkennbar, daß der Kartuschensack 2 über einen Adapter 19 mit dem Kopfstück 14 verbindbar ist. Der Adapter 19 weist einen nach unten gerichteten Aufschubkragen 20 für den oberen Rand 2′ des Kartuschensackes 2 auf. Nach oben hin geht vom besagten Adapter 19 ein Anschlußstutzen 21 aus, der mit einem entsprechenden Gegensteckteil des Kopfstückes fest kuppelbar ist.

Der Boden 2″ des Kartuschensackes 2 bildet einen kuppelförmigen Abschluß. Die von der Wandung des Kartuschensakkes 2 und dem Kopfstück 14 umschlossene pastöse Masse 1 besitzt bei entsprechend prallem Füllungsgrad eine hohe Eigenstabilität respektive Steifheit.

Die Oberseite des kappenförmig gestalteten, eine Handhabe H bildenden Kopfstückes 14 ist zu einer Betätigungsfläche 22 gestaltet. Diese erstreckt sich im wesentlichen im Mittelbereich des Kopfstückes 14.

Das ganze wird bei Nichtgebrauch von einer Schutzkappe 23 überfangen, welche unterseitig in einen Steckhaltekragen 23′ übergeht.

Die Ausbringung der pastösen Masse 1 über die Ausgabeöffnung 16 geschieht mit Hilfe eines Druckbodens 24. Letzterer ist Bestandteil einer vom Bodenbereich des Spenders Sp schrittweise in Ausgaberichtung x verlagerbaren Transporteinheit T. Zu dieser Transporteinheit T gehört außer dem erwähnten Druckboden 24 ein oberer Widerlagerteller I und ein unterer Widerlagerteller II sowie ein paar Zahnstangenleisten 25, 26. An letzterem stützen sich zwei diametral einander gegenüberliegende Rastzungen derart ab, daß die Transporteinheit T im Zustand des Zahnlückeingriffs ausschließlich in Richtung des Pfeiles x verlagert werden kann. Die Rastzungen des oberen Widerlagertellers I sind mit 27 bezeichnet, die des unteren Widerlagertellers II mit 28. Sie erstrecken sich jeweils diametral einander gegenüberliegend am im Querschnitt pratisch kreisrunden Widerlagerteller I bzw. II. Aufgrund einer axialen, mit Freigang beabstandeten Anordnung der Widerlagerteller I und II zueinander erfolgt der Zahnlückeneingriff entsprechend in unterschiedlichen Höhenlagen.

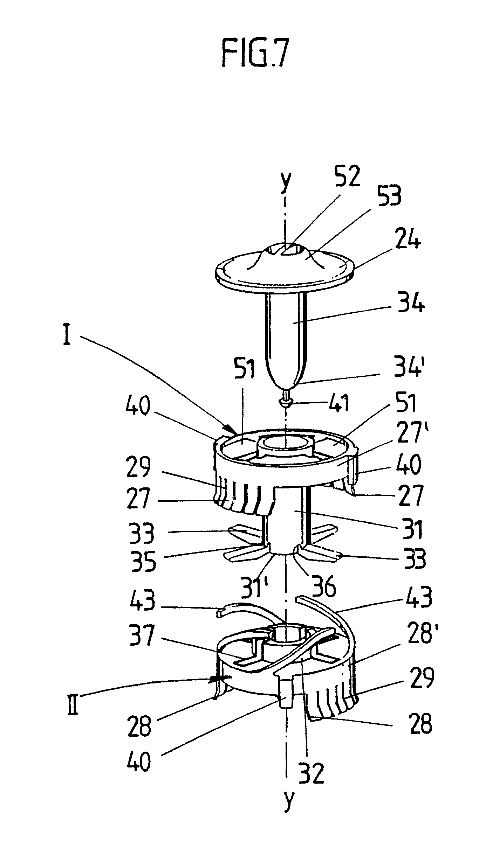

Die korrespondierenden Zahnstangenleisten 25, 26 sind am Einsatz 4 realisiert. Sie erstrecken sich im Querschnitt gesehen über ca. je 90° unter Anpassung an den Wölbungsverlauf des zylindrischen Rohrgehäuses 3. Die ebenfalls in diametraler Gegenüberlage angeordneten Zahnstangenleisten 25, 26 wurzeln im Bereich der Schulter 10 des Einsatzes 4 und reichen praktisch über die gesamte axiale Länge des Spenders Sp. Die Rastzungen 27, 28 besitzen eine kammzinkenartige Struktur. Ihre einzelnen Zinken sind plättchenförmig. Sie weisen in Richtung der Standfläche 6 und gehen je von einem nach unten gewinkelten bzw. vertikal ausgerichteten, in Umlaufrichtung ununterbrochenen Rand 27′ bzw. 28′ des Widerlagertellers I bzw. II aus. Die in axialer Richtung gemessene Länge der Rastzungen 27, 28 entspricht etwa der doppelten Höhe des Randes 27′ bzw. 28′. Die besagte Struktur geht besonders deutlich aus Figur 7 hervor. Die Zinkenlücken tragen das Bezugszeichen 29. Die untere halbe Länge der Rastzungen ist leicht schräg nach auswärts gestellt.

Die Zähne der Zahnstangenleisten 25, 26 besitzen Sägezahnstruktur, so daß eine im wesentlichen quer zur Längs mittelachse y-y des Spenders Sp orientierte Flanke und eine nach oben gerichtete Schrägflanke vorliegen.

Im bodennahen Bereich sind die Zahnstangenleisten 25, 26 über einen Endring 30 des Einsatzes 4 miteinander verbunden. Letzter setzt an der Innenseite der Zahnstangenleisten an, bleibt also mit seinem Außendurchmesser radial einwärts gerichtet deutlich hinter den Zahnstangenleisten zurück.

Zur Verbindung der beiden Widerlagerteller I, II miteinander geht vom oberen (I) eine zentral liegende, axial ausgerichtete Büchse 31 aus. Letztere durchgreift einen Führungsbund 32 des unteren Widerlagertellers II. Der Führungsbund weist nach oben. Sodann gehen vom unteren Ende der Büchse 31 Hubfinger 33 aus. Letztere untergreifen die horizontalflächige Unterseite des unteren Widerlagertellers II. Es handelt sich um doppelarmige, dem unteren Widerlagerteller II gleich angeformte Elemente. Die Lagerung der Hubfinger 33 befindet sich im Bereich der Büchsenwandung derart, daß der eine, innere Arm a der Hubfinger 33 in den Querschnittsbereich der Höhlung der Büchse 31 reicht und der andere, nach auswärts ragende Arm b unterhalb der ringförmigen, flächigen Partie des unteren Widerlagerteller liegt. Es handelt sich um insgesamt vier winkelgleich ausgerichtete Hubfinger 33, welche in Grundstellung eine im wesentlichen horizonale Erstreckung besitzen.

Die einwärts ragenden, kürzeren Arme a der Hubfinger 33 liegen im Wirkungsbereich eines in der Höhlung der Büchse 31 axial begrenzt verschieblich geführten Stößels 34. Letzterer ist materialeinheitlich angeformter Bestandteil des Druckbodens 24. Er geht von der Unterseite dieses Druckbodens 24 aus und reicht in Grundstellung mit einer unteren, zu einer Kuppel gestalteten Ende bis etwa auf die Ebene der Unterseite des unteren Widerlagertellers II. Die Kuppel, an der die korrespondierenden Flächen der einwärtsweisenden Arme a der Hubfinger 33 anliegen, ist mit 34' bezeichnet.

Die einzelnen Hubfinger 33 sind über je eine gelenkstellbildendes Filmscharnier 35 am unteren Buchsenrand angeformt. Die Filmscharniere 35 springen gegenüber dem unteren Büchsenstirnrand 31' etwas zurück. Rechts und links neben der das Filmscharnier 35 bzw. die Gelenkstelle bildenden Zone liegen axial orientierte, parallele Freischnittspalte 36. Hierdurch liegen die Hubfinger 33 praktisch auf ganzem Querschnitt in radial orientierten Schächten ein, so daß es auch zu einer vorteilhaften Führung bzw. seitlichen Abstützung der angeformten Hubfinger 33 am Büchsenkörper kommt.

Zum montagebedingten axialen Durchtritt der Hubfinger 33 durch die Tellerfläche des unteren Widerlagertellers II weist dieser konturentsprechende Durchstecköffnungen 37 auf, die auch den Führungsbund 32 erfassen. Es braucht also lediglich die kongruente Lage der kreuzförmig angeordneten Hubfinger 33 und Durchbrechungen der Durchstecköffnung 37 herbeigeführt zu werden, um durch anschließende Drehung um ca 90° zu einer bajonettverschlußartigen Montage der beiden Teile zu gelangen.

Gesichert wird diese Verbindungsstellung durch der Peripherie der beiden Widerlagerteller I, II angeformte, den Telleraußendurchmesser überragende Gleitsteine 40. Diese sind jeweils diametral einanderliegend angeordnet und nehmen nach Erreichen der Bajonettverschluß-Stellung eine Lage zueinander ein, in der sie beide auf einer Geraden übereinander liegen. Genau dies ist auch zugleich die zuordnungsgerechte Profilierung der Transporteinheit T für das Einbringen in das Spendergehäuse (Rohrgehäuse 3/Einsatz 4). Die entsprechende Kulissenführung für die Gleitsteine 40 ist in Form von zwei ebenfalls diametral einander gegenüberliegend angeordneten Schienenführungen 38 realisiert. Letztere befinden sich an der Innenwandfläche 3' des Rohrgehäuses 3. Die Schienenführungen 38 verlaufen raumparallel zur Längsmittelachse y-y des Spenders Sp. Es handelt sich einfach um zwei eine Führungsnut bildende, beispielsweise gleich mitangeformte Rippen 39 von höchstens der radialen Dicke der Zahnstangenleisten 25, 26. Die Innenfläche besagter Rippen 39 endet so vor der äußeren Schmalkante 30' des Endringes 30.

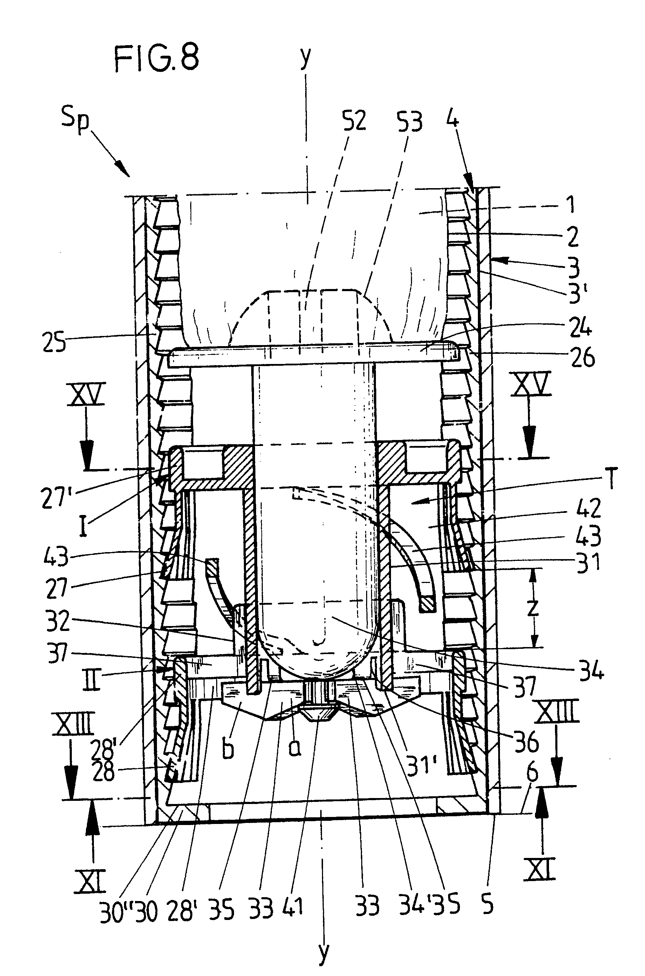

Den axialen Zusammenhalt beider Widerlagerteller I, II reicht man durch eine druckknopfartige Klipsverbindung zwischen den einwärtsragenden Armen a der Hubfinger 33 und einem pilzkopfartig gestalteten Zapfen 41 (vgl. Fig. 8). Der Schaft des pilzkopfförmigen Zapfens durchsetzt frei den zwischen den Enden der Arme a belassene Höhlungsbereich. Der Pilzrand übergreift die Unterseite der Köpfe der vier einwärtsgerichteten Arme a. Der Zapfen 41 geht von der höchsten Stelle der Kuppel 34' des Stößels 34 zentral nach unten gerichtet aus.

Die beiden Widerlagerteller I, II stehen in entgegengesetzen Richtungen unter Federbelastung, so daß der untere Widerlagerteller II auf dem größtmöglichen Abstand zum oberen Widerlagerteller gehalten wird, abgestützt durch die Hubfinger 33 und den Zapfen 41 bzw. die Kuppel 34', an der die inneren Arme a ebenso anliegen wie am unteren Pilzrand. Die entsprechende Spreizfeder kann von einer auf die Büchse 31 aufgefädelten Schraubengangdruck feder realisiert sein. Beim Ausführungsbeispiel ist jedoch eine Lösung dahingehend bevorzugt, daß in den die Büchse 31 umgehenden Ringraum 42 stegförmige Federelemente 43 zur Spreizbelastung der Widerlagerteller I, II vorgesehen sind. Die Federelemente 43 finden zwischen dem ohnehin durch entsprechenden axialen Überhang der Teller über die Büchse eine schützende Federkammer vor. Konkret sind die Federelemente 43 als in Umfangsrichtung ansteigende, der Wölbung der Spendervandung folgende, dem einen Widerlagerteller angeformte Federzungen gestaltet. Beim dargestellten Ausführungsbeispiel gehen die Federelemente vom unteren Widerlagerteller II aus, und zwar genügend beabstandet von der Peripherie des Tellers, und zwar so, daß sie noch hinter den Rand 27' des oberen Ringtellers passen und oben eine geschlossene ringförmige Stützschulter vorfinden.

In Spreizstellung, welche die Transporteinheit T in Grundstellung in vollem Maße einnimmt, sind beide Widerlagerteller etwa um drei volle Zahnlückenabstände zueinander axial beabstandet. Dieser Hubfreigang ist mit z bezeichnet (und könnte auch geringer sein, beispielsweise sich über nur einen Zahnsprung erstrecken).

Einen etwa entsprechenden axialen Abstand beläßt die Transporteinrichtung auch zwischen der Oberseite des oberen Widerlagertellers I und der Unterseite des Druckbodens 24. Den gleichen axialen Abstand nimmt der untere Rand des Führungskrangens 13 zur durch Wandungsversatz erzeugten Innenstufe 44 des Einsatzes 4 ein.

Aufgrund des zwischen den Zahnstangenleisten 25, 26 belassenen, fensterartigen, längsorientierten Freiraumes (Fenster 50) läßt sich die aus Druckboden 24 und den Widerlagertellern I, II bestehende Tranporteinheit T zusammen mit dem die Zahnstangenleisten 25, 26 aufweisenden Einsatz 4 im Rohrgehäuse 3 anschlagbegrenzt drehen derart, daß die Zahnstangenleisten 25, 26 aus dem Bereich der Rastzungen 27, 28 ganz ausschwenken können zwecks Erzielung einer freien Rückbewegung der Transports einheit T entgegen der Sperrichtung der Zähne. Dies geschieht einfach unter Erfassen des Drehkranzes 8. Um dem Benutzer die jeweilige Position auch augenfällig zu machen, sind an der Mantelwand des Rohrgehäuses 3 zwei Marken vorgesehen, bezeichnet mit 45 und 46 (vgl. Fig. 1). Diesen steht am beweglichen Teil, dem Drehkranz 8 nämlich, eine Gegenmarke 47 gegenüber. Ist diese Gegenmarke 47 in Ausrichtung zur Marke 45 gebracht, so liegt die Spendebereitschaftsstellung vor; tritt dagegen die Gegenmarke 47 unter Drehen des Einsatzes 4 in liniare Gegenüberlage zur Marke 46, so kann das Befüllen des Spenders bewirkt werden.

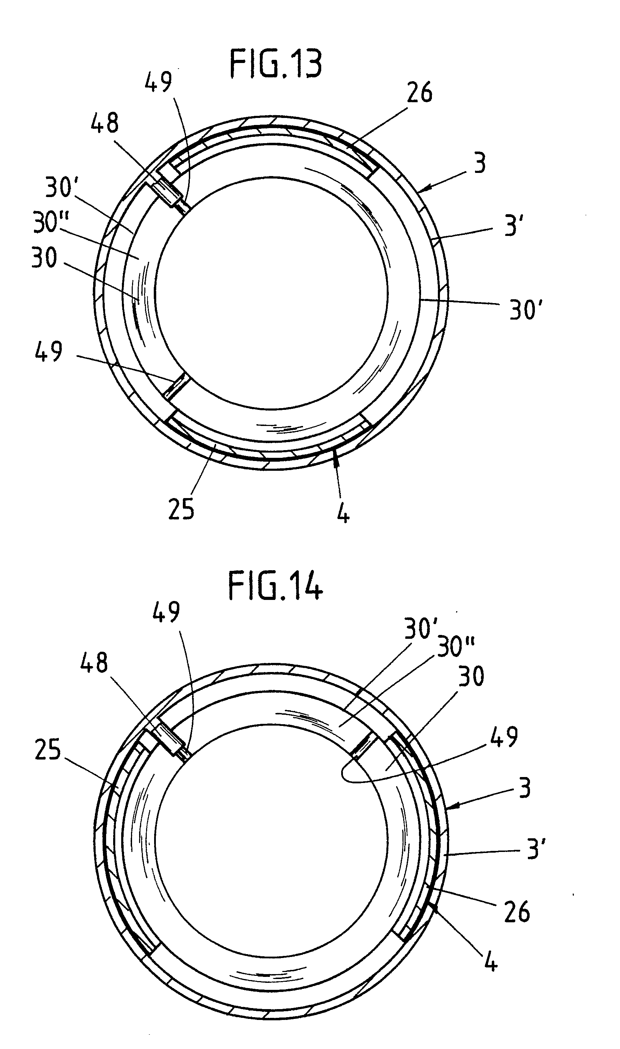

Die jeweiligen Endstellungen sind nicht nur anschlagbegrenzt, in dem die Schmalkanten der Zahnstangenleisten 25, 26 gegen die eine oder andere Seite der in die Fenster 50 ragenden Rippen 39 fahren; vielmehr ergibt sich zugleich eine fühlbare Sicherung dieser Endstellungen, in dem ein als Raststift und zugleich als Fesselungsstift 48 dienendes Organ des Rohrgehäuses 3 mit dem oben bereits erwähnten Endring 30 des Einsatzes 4 zusammenwirkt. Es wird auf die Figuren 13 und 14 verwiesen. Dort geht der besagte Fesselungsstift 48 von der Innenseite des Rohrgehäuses 3 radial gerichtet ins Zentrum weisend aus. Er übergreift den brückenartig frei zwischen den Zahnstangenleisten 25, 26 gespannten Abschnitt des Endringes 30, welcher entsprechende Federungseigenschaft aufweist. Die dem Kopfstück 14 zugewandte Übergreifseite $30''$ des Endringes 30 formt im Bereich des Drehwinkelabschnitts des Einsatzes 4 zwei Rastmalden 49 zum Eintritt des Fesselungsstiftes in der jeweiligen Drehendstellung des Einsatzes 4. Bezüglich der Rastmulden handelt es sich um quergerundete Nuten, deren Bohrungsmitelachse noch etwas über der Ebene der Übergrifffläche $30''$ liegt, so daß keine zu hart wirkenden Sperrungen vorkommen. Der Fesselungsstift 48 kann bei angeformter Ausgestaltung so flexibel ausgeführt sein, daß er praktisch im Schnappgriff hinter die Übergriffseite $30''$ gedrückt werden kann. Andererseits ist aber auch eine schraubtechnische Zuordnung des Fesselungsstifes 48 denkbar, indem dieser einfach durch eine entsprechende Gewindebohrung des Rohrgehäuses 3 geschraubt wird.

Die Funktion der Vorrichtung des Spenders ist wie folgt:

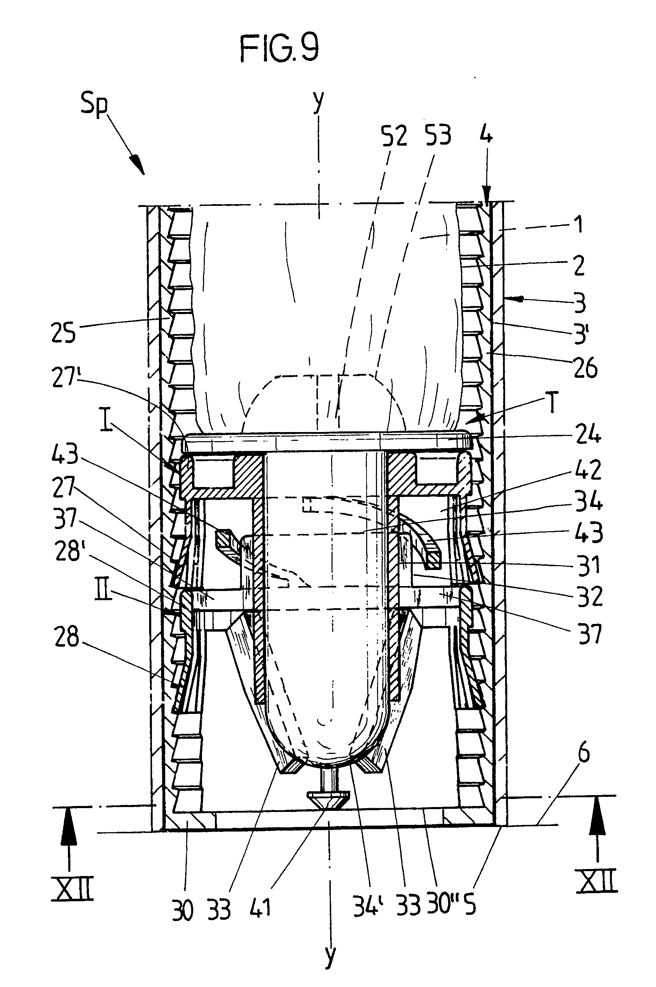

Durch Ausübung einer Druckkraft in Richtung des Pfeiles P wird das überstehende Kopfstück 14 entgegen der Richtung des Pfeiles x verlagert. Die pastöse Masse 1 gerät unter Druck, da sich die prallgefüllte Sackkartusche 2 am Druckboden 24 wie an einem Widerlager abstützt. Sie (1) tritt über die Ausgabeöffnung 16 stranggeformt aus. Mit Erreichen einer bestimmten Druckschwelle bricht der Widerstand zusammen. Über die Füllstandssäule des Kartuschensackes 2 wird nun der Druckboden 24 abwärts bewegt. Sein Stößel 34 verschiebt sich dabei geführt in der Büchse 31 nach unten. Der obere Winderlagerteller I stützt sich derweil immer noch über seine Rastzungen 27 an der ortsfesten Zahnung der Zahnstangenleisten 25, 26 ab. Der untere Widerlagerteller II wird dagegen unter weiterem Spannen bzw. Laden der Spreizfeder (Federelemente 43) entgegen der Federbelastung in Ausgaberichtung verlagert. Er nähert sich dem abgestützten oberen Widerlagerteller I, beispielsweise unter Ausnutzung eines Teilhubabschnittes des Hubfreiganges z oder unter voller Ausschöpfung dieses Hubfreiganges z. Bei dieser Abwärtsbewegung des Stößels 31 werden nämlich die Hubfinger 33 um ihre Gelenkachse geschwenkt. Dies hat aufgrund der Doppelarmigkeit und der Zuordnungsverhältnisse die Wirkung, daß die auswärtsweisenden Arme 6 den unteren Widerlagerteller II anheben. Es liegt die Situation gemäß Figur 9 vor. Die Rastzungen 28 des unteren Widerlagertellers II verhaken nun in der höher liegenden Ebene. Wird nun die Druckbelastung vom Kopfstück 14 genommen, so erfolgt ein nachziehendes Anheben des oberen Widerlagertellers I durch die Kraft der Federelemente 43 unter mitnahme des Druckbodens 24 und Anheben der Sackkartusche in die Ausgangsstellung. Der obere Widerlagerteller I tritt nun seinerseits in die Verhakung zu den Zahnstangenleisten 25, 26.

Gerät die Transporteinrichtung T in den kopfstücknahen Bereich unter entsprechendem Entleeren des Kartuschensakkes, so wird nur noch eine leergehende Betätigung erreicht. Der Benutzer braucht nun nur den entleerten Kartuschensack 2 unter Erfassen des Kopfstückes 14 und Überwindung der Rastnasen 12 aus dem Spender herauszuziehen. Durch Drehen des Drehteils 8 derart, daß Gegenmarke 47 und Marke 46 einander gegenüberstehen, sind die Widerlagerteller I, II aus dem Wirkungsbereich der Zahnstangenleisten 25, 26 getreten. Die Rastzungen 27, 28 verlieren ihren Halt. Sie liegen im Bereich der zwischen den Zahnstagenleisten 25, 26 belassenen Fenster 50. Die Transporteinheit T rutscht schwerkraftabhängig in die Ausgangsposition zurück. Nach Einsetzen eines neuen Kartuschensackes 2 ist der Spender wieder funtionsbereit.

Bleibt noch nachzutragen, daß die spritztechnische Anformung der Hubfinger 33 insofern erleichert ist, als Kernteile durch Fenster 51 des oberen Widerlagertellers I hindurchtreten können. Diese Fenster 51 sind dabei auch so bemessen, daß im Randbereich noch genügend Federwiderlagerfläche für die Federelemente 43 verbleibt.

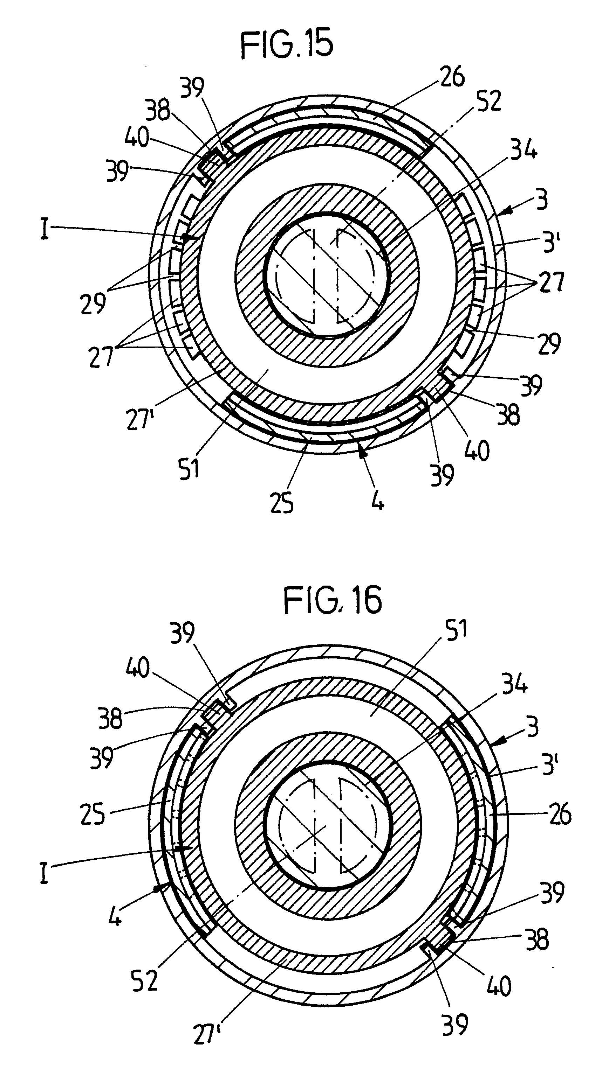

Die in den Schnittdarstellungen Figur 15, Figur 16 wiedergegebene massive Ausgestaltung des Stößels 34 ist aus materialsparendem Gründen nicht in die Praxis übernommen; vielmehr ist dieser Stößel 34 hohl ausgebildet. Es wird auf Figur 7 verwiesen, wo zwei parallelverlaufende, von oben her offene Schächte verbleiben, die zu einer zufriedenstellend dünnen Wandung führen, ggf. unter Zwischenlassung einer durchgehend axial ausgerichteten, bis in den Kopf des der Kuppel 34' reichenden Scheidewand 52.

Die Oberseite des Druckbodens 24 setzt sich noch in eine kuppelförmige Ausformung 53 fort, welche sich in den flexiblen Boden des Sackes 2 hineindrückt und in Ausgabe-Endstellung eine weitestgehend verlustfreie Ausbringung der pastösen Masse 1 begünstigt.

Die Schienenführungen 38 sind unten geschlossen.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

**Ansprüche**

1. Vorrichtung zum schrittweisen Zahnstangen-Transport eines Druckbodens (24), z. B. an Spendern (Sp) zur portionierten Ausbringung von Produkten, beispielsweise pastöser Art, bei welcher sich der Druckboden (24) entgegen der Verlagerung einer durch Federbelastung wieder in die Grundstellung zurücktrenden Handhabe (H) bewegt, dadurch gekennzeichnet, daß dem Druckboden (24) zwei sich wechselweise an der Zahnstangenleiste abstützende Widerlagerteller (I, II) zugeordnet sind, welche sich bei Druckbodenverlagerung entgegen Federbelastung einander nähern.

2. Vorrichtung, insbesondere nach Anspruch 1, dadurch gekennzeichnet, daß die Druckboden-Belastung durch Beaufschlagung desselben mit der Wand (Boden 2'') eines eine pastöse Masse (1) als Produkt enthaltenden Kartuschensakkes (2) erzielt ist, welcher am oberen Ende mit einer an der Oberseite die Handhabe (H) ausbildenden und in einem Rohrgehäuse (3) axial begrenzt frei verschieblichen Kopfstück (14) ausgestattet ist.

3. Vorrichtung, insbesondere nach einem oder mehreren der vorhergehenden Ansprüche, dadurch gekennzeichnet, daß jeder Widerlagerteller (I, II) zwei einander diametral gegenüberliegende Rastzungen (27, 28) besitzt, die entsprechend auf unterschiedlichen Höhenlagen in die Zahnlücken zweier gegenüberliegender Zahnstangenleisten (25, 26) eingreifen.

4. Vorrichtung, insbesondere nach einem oder mehreren der vorhergehenden Ansprüche, dadurch gekennzeichnet, daß die Rastzungen (27, 28) kammzinkenartige Struktur besitzen, die von einem vertikal gerichteten Tellerrand (27' bzw. 28') der Widerlagerteller (I, II) ausgeht.

5. Vorrichtung, insbesondere nach einem oder mehreren der vorhergehenden Ansprüche, dadurch gekennzeichnet, daß der obere Widerlagerteller (I) mit einer Büchse (31) den unteren Widerlagerteller (II) trägt, welche Büchse am unteren Ende Hubfinger (33) aufweist, die den unteren Widerlagerteller (II) untergreifen und bei Verlagerung des Druckbodens (24) den unteren Widerlagerteller (II) in Richtung des oberen Widerlagertellers (I) auf der Büchse (31) verschieben.

6. Vorrichtung, insbesondere nach einem oder mehreren der vorhergehenden Ansprüche, dadurch gekennzeichnet, daß die Hubfinger (33) doppelarmig ausgebildet sind und die einwärtsragenden Arme (a) vom unteren Ende eines Stößels (34) des Druckbodens (24) beaufschlagt sind.

7. Vorrichtung, insbesondere nach einem oder mehreren der vorhergehenden Ansprüche, gekennzeichnet durch eine druckknopfartige Klipsverbindung zwischen den einwärtsrangenden Armen (a) der Hubfinger (33) und einem Zapfen 41 am unteren Ende des Stößels (34).

8. Vorrichtung, insbesondere nach einem oder mehreren der vorhergehenden Ansprüche, dadurch gekennzeichnet, daß in dem die Büchse (31) umgebenden Ringraum (42) Federelemente (43) zur Spreizbelastung der Widerlagerteller (I, II) vorgesehen sind.

9. Vorrichtung, insbesondere nach einem oder mehreren der vorhergehenden Ansprüche, dadurch gekennzeichnet, daß die Federelemente (43) als in Umfangsrichtung anstei gende, dem einen Widerlagerteller angeformte Federzungen gestaltet sind.

10. Vorrichtung, insbesondere nach einem oder mehreren der vorhergehenden Ansprüche, dadurch gekennzeichnet, daß die Hubfinger (33) über Filmscharniere (35) am unteren Büchsenrand angeformt sind, welche gegenüber dem Büchsenstirnrand (31') zurückversetzt liegen.

11. Vorrichtung, insbesondere nach einem oder mehreren der vorhergehenden Ansprüche, gekennzeichnet durch eine Seitenführung der Hubfinger (33).

12. Vorrichtung, insbesondere nach einem oder mehreren der vorhergehenden Ansprüche, dadurch gekennzeichnet, daß die aus Druckboden (24) und den Widerlagertellern (I, II) bestehende Transporteinheit (T) zu einem die Zahnstangenleisten (25, 26) besitzenden Einsatz (4) des Rohrgehäuses (3) drehbar ist derart, daß die Zahnstangenleisten (25, 26) aus dem Bereich der Rastzungen (27, 28) ausschwenken zwecks Erzielung einer freien Rückbewegung der Transporteinheit (T) gegen die Sperrrichtung der Zähne in die Ausgangsstellung.

13. Vorrichtung, insbesondere nach einem oder mehreren der vorhergehenden Ansprüche, dadurch gekennzeichnet, daß die Relativbewegung durch Drehen an einem Drehkranz (8) an dem einen Ende des Einsatzes (4) und die Transporteinheit (T) radial auswärtsgerichtete Gleitsteine (40) besitzt, die in Schienenführungen (38) des den Einsatz (4) umgebenden Rohrgehäuses (3) laufen.

14. Vorrichtung, insbesondere nach einem oder mehreren der vorhergehenden Ansprüche, dadurch gekennzeichnet, daß der untere Widerlagerteller (II) Durchstecköffnungen (37) für die Hubfinger (33) des oberen Widerlagertellers (I) ausbildet, dies zur bajonettverschlußartigen Montage beider Teile derart, daß die Gleitsteine (40) in einer Geraden übereinander liegen und das Lösen der Bajonettverschluß-Verbindung durch die Schienenführung (38) der Gleitsteine (40) gesichert ist.

15. Vorrichtung, insbesondere nach einem oder mehreren der vorhergehenden Anprüche, dadurch gekennzeichnet, daß der obere Widerlagerteller (I) mit fluchtend zu den Hubfingern (33) angeordneten Fenstern (51) ausgestattet ist.

16. Vorrichtung, insbesondere nach einem oder mehrere der vorhergehenden Ansprüche, gekennzeichnet durch einen Fesselungsstift (48) des Rohrgehäuses (3), welcher Fesselungsstift einen Endring (30) des Einsatzes (4) übergreift.

17. Vorrichtung, insbesondere nach einem oder mehreren der vorhergehenden Ansprüche, dadurch gekennzeichnet, daß der Endring (30) an der Übergriffseite (30″) Rastmulden (49) zum Eintritt des Fesselungsstiftes (48) in der Drehendstellung des Einsatzes (4) aufweist.

18. Vorrichtung, insbesondere nach einem oder mehreren der vorhergehenden Ansprüche, dadurch gekennzeichnet, daß das Kopfstück (14) des Kartuschensackes (2) an federnden Fingern (11) verrastet, die am oberen Ende des Einsatzes (4) vorgesehen sind.

FIG.1

FIG.2

FIG.5

23

23'

11  12        12  11

9

10

47

4

25

50

50

26

39  38   39   38

7

39

39

45     46

3

FIG.3

30"

30

49        30'

49    y    30"

FIG.4

y

# FIG. 6

# FIG.7

# FIG.8

# FIG.9

# FIG.10

FIG.11

FIG.12

# FIG.13

# FIG.14

# FIG.15

# FIG. 16

FIG.17

FIG.18